# EUROPEAN PATENT APPLICATION

(11) **EP 4 657 184 A1**
(43) Date of publication of application: **03.12.2025**
(21) Application number: 24178219.2
(22) Date of filing: 27.05.2024
(51) Int. Cl.: G05B 15/02

(54) **METHOD FOR OBTAINING INFORMATION MODEL DATA FOR ONE OR MORE BUILDINGS**

(71) Applicant: ABB SCHWEIZ AG, 5400 Baden (CH)
(72) Inventor: BORRISON, Reuben, 68782 Brühl (DE); DIX, Marcel, 78476 Allensbach (DE); ALEKSY, Markus, 67065 Ludwigshafen (DE)
(74) Representative: Maiwald GmbH

(57) **Abstract**

The disclosure relates to a method (100) for obtaining information model, IM, data for one or more buildings (10), the method (100) comprising:
- obtaining building management system, MS, data (22) of a building management system of the one or more buildings (10), the MS data (22) being at least in the form of image data;
- obtaining instruction data (24) comprising one or more instructions for processing the MS data (22) by one or more Artificial Intelligence, Al, processing components (44) for generating the IM data;
- providing the MS data (22) and the instruction data (24) for processing by the one or more AI processing components (44); and
- obtaining the IM data by the AI processing component (44).

## Description

### TECHNICAL FIELD

The present invention relates to a method for obtaining information model data for one or more buildings, one or more computer program products, and a data processing system.

### BACKGROUND

Building management systems, BMS or MS, are being used for management of a variety of buildings, including commercial and residential buildings. Particularly for commercial buildings such as but not limited to, for example, office buildings, retail buildings, hospitality buildings, such as hotels and movie theatres, healthcare buildings, such as hospitals and clinics, educational buildings, such as schools and universities, and industrial buildings, such as factories, workshops, building management systems may utilize a MS. All of these examples of buildings comprise several devices, in particular electrical devices of some sort, such as but not limited to, for example, sensors, control units, in particular actuators, and other devices or components, which are being used in the buildings to provide comfort to the users of the buildings, to enable fulfilling the function of the buildings and similar.

For example, typically, commercial buildings are supplied with different kinds of technical systems, e.g., Heating, Ventilation and/or Air Conditioning, HVAC, systems for which different sensors, e.g., temperature sensors, and control units, e.g., temperature control units, and actuators, e.g., pumps, valves, etc. are being used. These are distributed spatially throughout the building, in particular in different rooms and on different floors thereof. Additionally, commercial buildings are often supplied with many different kinds of systems such as but not limited to lighting systems, e.g., including lighting control units, lighting devices, etc., electrical systems, e.g., electricity control units, electrical sockets, access control systems, security and alarm systems, shading and glazing systems, and many different kinds of systems for ensuring comfort of the users of the buildings and/or for ensuring that a function or purpose of the building is met.

Generally, the MS serves the purpose of managing or controlling the technical systems of the building. All of the aforementioned technical systems may have hundreds, thousands or more devices, in particular electrical devices, inside a building, which may be required to be managed or, in other words, controlled depending on the size and type of the building. Thus, the MS may control the operation of thousands of control units such as actuators, sensors, and similar based on different user input, schedules, measurements, or sensor readings and so on. A building controlled by a MS is often referred to as an intelligent building or a smart building. Also known as building automation systems, BAS, or building energy management systems, BEMS, the MS may be the semi or fully automated centralized control of a building's HVAC, electrical, lighting, shading, access control, security systems, and other, potentially interrelated, technical systems of the building. The objective of the MS may thus be, for example, improved occupant comfort, efficient operation of the technical systems, reduction in energy consumption, reduced operating and maintaining costs and increased security. For example, the MS may functionality keep a building's climate within a specified range, provide light to rooms based on occupancy, monitor performance and device failures, and provide malfunction alarms to building maintenance staff. The MS may operate to reduce building energy and maintenance costs compared to a non-controlled building.

Most commercial buildings built after 2000 include a MS, whilst older buildings may be retrofitted with a new MS. There are many different providers of building management systems and most buildings have a completely different MS depending on their design and the provider. Different MS may use completely different information models, IM, or no IM at all. Different MS may have completely different data, in particular when it comes to the mapping or data structure of how the different technical systems and the devices thereof are connected with one another physically, spatially within the building, logically, e.g., in terms of their control and operational relationship to one another, and virtually.

Hence, there is almost no MS like the other. Thus, when a building is modernized, retrofitted with a new MS, a MS shall be updated, or an additional system or application is to be used for an existing building, it is very cumbersome to analyze the MS data of the particular building given that the MS data is unique, and therefrom generate a IM describing the mapping or data structure of the physical, virtual and logical entities of the building and the MS, which may then be used in a new MS for the building or an updated MS or any other system or application. Besides being very cumbersome and time-consuming, the process of generating an IM from the MS data is typically, due to the vast differences among MS in existing buildings, prone to errors. However, when the IM is incorrect or contains errors, e.g., when different devices are not logically connected to one another in the IM or different devices are not located in the actual room according to the IM as compared to the building, then using this erroneous IM may cause minor to drastic issues inside the MS to be updated or used or any other application or system. For example, the lighting system or HVAC system may not work as required when using an erroneous IM, e.g., switching on lights in the wrong rooms, heating the wrong rooms, heating instead of cooling rooms, and similar. Further, when the IM is used for certain systems or applications such as energy optimization, there may be significant error resulting in a control scheme for the building being generated based thereon, which may lead to an increased energy consumption of the building rather than a decreased energy consumption. Thus, having as little errors as possible inside the IM and having the IM to reflect the actual entities of the building as precise as possible is of utmost importance to ensure proper functioning of the building.

For example, the MS data may be provided in natural language by a MS. However, although this data may be easily read by a computer, different MS will have different natural language names for the same type of device, different natural language names for the same location of the device, different natural language descriptions of their relationships, etc. Further, natural language data may be not available or may be mixed with other forms of data, e.g., image data. It has been found that no MS is like the other and every MS data needs to be carefully and time intensively analyzed before it is possible to, for example, update the MS data, e.g., by exchanging devices inside the building, adding new devices inside the building, removing devices inside the building, relocating devices, etc. Otherwise, the IM will be erroneous resulting in the errors of the MS or any other system or application using the IM.

### SUMMARY

The above problem or need is at least partially solved or alleviated by the subject matters of the independent claims of the present disclosure, wherein further examples are incorporated in the dependent claims.

According to an aspect of the present disclosure, there is provided a method for obtaining information model, IM, data for one or more buildings, the method comprising:
- obtaining building management system, MS, data of a building management system of the one or more buildings, the MS data being at least in the form of image data;
- obtaining instruction data comprising one or more instructions for processing the MS data by one or more Artificial Intelligence, Al, processing components for generating the IM data;
- providing the MS data and the instruction data for processing by the one or more AI processing components; and
- obtaining the IM data by the AI processing component.

In particular, the information model, IM, may be a building information model. In any case, the information model may be understood as digital data and/or used for a digital representation of the one or more buildings with all of its technical systems. The IM, in particular its data, may have any form, such as but not limited to, text, e.g., natural language, computer code, data tables, structurized data, functions, diagrams, graphs, e.g., illustrating the relationship between devices or entities of the building, and/or similar, and the digital representation may be provided based thereon or be reflected thereby. In particular, the IM may be digital data and/or, in particular indicative of, a digital representation of physical and functional characteristics of entities or objects, devices or components used in the planning, designing, construction, operation, and/or maintenance of the one or more building. Hence, an IM may generally be used in the full lifecycle management of a building and its components within its technical systems. Specifically in the context of this disclosure, typically, the one or more buildings are already existing such that the MS may already be used or operating, hence the digital representation would typically be used for the operation and/or maintenance of the one or more buildings. IM data may be stored as one or more computer readable files and used by one or more systems such as but not limited to the MS or other systems or applications. The IM may contain holistic data exclusive to the components or devices of the buildings, which can be used for a variety of purposes and in a variety of systems or applications, such as but not limited to controlling occupant or user comfort inside the building, efficient operation of the technical systems, reduction in energy consumption, reduced operating and maintaining costs, increased security, geometry for spacing calculations, power or safety ratings, energy declaration of standard conformity and more. The MS may alternatively be referred to as a building automation system, BAS, or building energy management system, BEMS. The MS may be the semi or fully automated centralized control of a building's technical systems.

The method of the first aspect may in particular be an at least partially or fully computer implemented method. This means that at least one, multiple or all of the steps of the method may be carried out by a data processing system, which may comprise one or more data processing apparatuses, which may be in the form of computers or computing units, which may comprise one or more processors and data storages or memories. Different steps may be carried out by the same or by different data processing apparatuses of the data processing system.

The invention is based on the finding that MS data from different existing buildings may be in the form of image data, i.e., having one or more, in particular multiple, e.g., tens, hundreds, thousands or more, of images, depending on the size of the one or more buildings. Further, the different buildings are never the same given the different MS designers, different device providers, different requirements, different regulations in different countries, different preferences, and so on. Hence, MS data, in particular when in the form of image data, may be very complex and thus difficult to analyze and transfer into IM data. Further, each MS data is, besides potentially being very large in its amount of information, different in terms of its technical content or information describing the building and being used for management or, in other words, control of the building, e.g., which device or component is and does what based on its natural language name, where is it located, how is it connected operationally to other devices, how is it controlled, what are possible control settings or setpoints of the device, etc. Also, the MS data may comprise parts of or some sort of IM data, i.e., an at least partially structurized representation of the entities of the building, or no such IM data at all. Thus, it is a very complex problem to get a correct technical representation of the building through generating the IM data.

There is no easy solution like a template to this problem because of the uniqueness of each MS image data, meaning that the template will never be able to transform different images representing different views of parts of buildings or different layouts as may be contained inside the MS data, which may be characterizing the operation and control performed by the MS, to the correct technical relationships, functions, status, locations, etc. of the typically hundreds, thousands or more (depending on the building size and equipment) of the devices, thereby typically producing ten thousands to millions of information to be understood and included in the IM data. Hence, when deterministically transforming the MS data into IM data, independent of how structured the MS data is, there will always be issues and errors in the IM data or in the process, requiring manual human input to solve the issues and bearing the risk that errors are overseen. However, given the capabilities of artificial intelligence, Al, model, in particular based on machine learning, it may be possible to transform the MS image data into the IM data with better results and accuracy in terms of the technical relationships and understanding of the IM data. That is because AI models may understand or at least decipher the MS image data and, together with instructions on how to process them, technically structurize them more accurately to reflect the actual building setup with its technical system, e.g., where the different devices are located, how they are operatively connected to each other, what their setpoints are, etc. Similarly, this may be done by AI models, e.g., based on one or more LLMs, for natural language data, e.g., in the form of text data or as may be contained as written text inside the one or more images of the image data.

The method of the first aspect of this disclosure allows for obtaining IM data based on AI processing and MS data, which may be at least partially in the form of image data, which means that other parts of the MS data may have another form, e.g., text data, as discussed herein. Hence, it may be possible to obtain IM data based alone or at least partially on MS image data such that, even if other forms of data are also being considered for obtaining the IM data, the overall accuracy and thus quality of the obtained IM data will be improved.

In an example, the MS data, in particular the MS image data, and/or the IM data may be indicative of information associated with entities of or for the one or more buildings. For example, the IM data may comprise entity information indicative of the information associated with the entities. The information associated with the entities may for example relate at least to one or more of: a location of the entities, a type of the entities, a status of the entities, a usage of the entities, a function of the entities, a size of the entities, or a relationship between the entities, The entities may be physical entities, virtual entities and/or logical entities, for example. The information associated therewith may describe the entities in terms of their physical, virtual and/or logical characteristics or properties. Physical entities may be anything having a physical presence in the one or more buildings, e.g., objects, devices, components and similar as herein described. Examples are mechanical systems or devices thereof, such as air handling units, luminaires, variable air volume boxes. Other examples are lighting systems and lighting units or devices thereof, such as light switches, light sources, and similar. Other examples are networked devices like electric meters, thermostats and electrical vehicle chargers. Yet other examples are spatial elements like rooms and floors. Virtual entities may be anything whose representation is based in software or a computer program, as may be stored on a data storage. Examples are sensing and status points which allow software to read the current state of the one or more buildings (such as the value of a temperature sensor, the energy consumption of a space heater, or the speed of a fan), and actuation points which allow software to write values (such as temperature setpoints or the brightness of a lighting fixture). Logical entities may be those entities or collections of entities that may be defined by one or more rules, in particular a set of rules. Examples may be HVAC zones and lighting zones. Also, any concepts such as class names, tags and relationships may fall into this category. A tag may be an attribute of an entity. Examples of tags may be sensor, setpoint, air, water, discharge, and leaving. A class may be a named category with intentional meaning, e.g., a definition, used for grouping entities. Classes may be organized in hierarchies, and entities may be instances of one or more classes. Classes may also have a set of associated tags, which may provide helpful annotations for discovery. A relationship may define the nature of a link between two entities, such as for example a control or operational relationship between different physical entities, e.g., a light switch and a light source. Examples of relationships are encapsulation (one entity is contained within another), sequence (one entity takes effect before another in some process) and instantiation (one entity's type is given by another entity). Other examples of relationships is "location" / "is located in" or "feeds / is fed by".

In an example, the entities may be at least one or more of: Heating, Ventilation and/or Air Conditioning, HVAC, entities, lighting entities, electrical entities, spatial entities, sensor entities, or control entities, in particular actuator entities. For example, a spatial entity may be a physical space, e.g., a room, floor or similar. For example, a lighting entity may be a light switch, light source, or similar. Logical and/or virtual entities may provide information or relationships associated with the different physical entities with one another. For example, the MS data and/or the IM data may contain information associated with a physical entity, e.g., that it is in the form of a light source and that it is located inside a specific room. Multiple or all of HVAC system, lighting system, electrical system, spatial system, sensor system and control system, and the information associated therewith, may be included in the MS data and/or the IM data, thus allowing the MS to operate and/or control multiple or all of these systems and, for using the IM data to update the MS or to be used for another system or application in relation to the one or more buildings, e.g., to provide another application or system on top or in addition of the MS for optimizing the energy management of the one or more buildings, in particular, when there is no or only poor energy management optimization in the current MS. Alternatively, for example, the MS or another system or application may be using the IM data or, in other words, the IM data may be used for anomaly detection of the MS or forecasting energy consumption for different scenarios, e.g., exchange of devices or addition of new devices, for example, for reducing the energy consumption of the building.

In an example, the image data may at least relate to one or more screenshots of the building management system of the one or more buildings and/or one or more technical drawings of the one or more buildings. Relate to may mean that the image data comprises one or more images in the form of screenshots and/or technical drawings, for example, but not only. This means that other image data than screenshots and/or technical drawings may be provided. For example, the image data may be screenshots or screen captures from a MS executed by a data processing apparatus and as may be visualized on a screen or display thereof. The screenshots may have a virtual representation of the entities, e.g., a location of the different physical entities, e.g., electrical devices, within a spatial entity, e.g., in the form of a room, inside the one or more buildings. Additionally, the screenshots may have text data, e.g., in the form of natural language. The entity data indicative of the information associated with the entities may accordingly be extracted from such image data, in particular screenshots. Another example of image data may be a floor plan, a building plan or a building information model file (e.g. in Revit-format) describing the building or parts of it. The image may have any file format, e.g., JPG or PDF.

In an example, at least one of the one or more AI processing components may be a generative AI processing component based on at least one Large Language Model, LLM. The generative AI processing component(s) may be implemented in or provided as software and executed on the same data processing apparatus as the one which may be executing the method of the first aspect or on a different one or several different ones, for example. For example, the AI processing component(s) may be executed on one or more distant or remote servers, which may have increased data processing capabilities and storages for storing one or more LLMs. Alternatively, these may be locally stored and executed. The generative AI processing component(s) may be trained with or based on any LLM, e.g., general LLM and/or LLM specific for MS and/or IM. Hence, the generative AI processing component(s) may be any generative AI processing component(s) such as provided by OpenAI, Microsoft, Google and others, e.g., ChatGPT, Google Gemini or Bard, and similar. Or, alternatively, the generative AI processing component(s) may be trained with or based on open source LLMs, for example.

In an example, at least one of the generative AI processing components may be based on at least one multimodal LLM. The generative AI processing component(s) based on at least one multimodal LLM may advantageously process all content of the MS data, including or only being in the form of the image data, by interpreting the image data or converting it to the IM data despite being image data, in particular in the form of a knowledge graph and/or information of a specific ontology, such as Brick or Haystack, for example. Different from a "normal" LLM, a multimodal LLM is able to also process multimodal data to generate the IM data according to the obtained instruction data, including the image data. Further, the multimodal LLM may process video data and/or audio data. The image data may also comprise multiple images as part of a video or, in other words, the image data may be video data, and hence also be processed by the AI processing component based on the at least one multimodal LLM. The at least one generative AI processing component based on at least one multimodal LLM may be or form a first AI or ML, machine learning, pipeline as herein discussed further below. Such first AI or ML pipeline may be used alternatively to one or more other AI or ML pipelines for generating the IM data by processing the obtained instruction data and MS data by the respective AI or ML pipeline.

In an example, another one of two or more AI processing components may be configured for at least one of entity detection, entity classification and optical character recognition for the image data prior to the thereby detected entities, classified entities and/or recognized optical characters being processed by the AI processing component being based on the at least one LLM. Hence, there may be alternatively to the generative AI processing component based on the one or more multimodal LLM, or additionally to it, two or more additional or other AI processing components. One of these two AI processing components may be configured for entity detection in the MS image data. This means that the previously given examples of entities may be detected by that AI processing component. Additionally, or alternatively, that AI processing component may be classifying these entities, e.g., into one or more of the HVAC entities, lighting entities, electrical entities, spatial entities, sensor entities, or control entities and/or one or more of the location of the entities, the type of the entities, the status of the entities, the usage of the entities, the function of the entities, the size of the entities, or the relationship between the entities. Further, or alternatively, that AI processing component may be configured for optical character recognition, OCR, of text contained in the MS image data. The result of that AI processing component in the form of detected entities, classified entities and/or recognized optical characters may then be provided to the other one of the two AI processing components. For example, this result or information may contain extracted text, e.g., as extracted by the OCR, and the proximity of the entities and/or text in the images of the image data. The AI processing component based on the at least one LLM may then, in particular together with context data provided in the instruction data, generate the IM data, similar to the first AI or ML pipeline explained above. These two AI processing components may form a second AI or ML pipeline.

In an example, one of two or more AI processing components may be configured for at least one of entity detection, entity classification and optical character recognition for the image data, and another one of the two or more AI processing components may be configured for consequently classifying nodes and/or relationships of the detected entities, detected classes and/or recognized characters in the IM data. These two or more AI processing components may form a third AI or ML pipeline, which may be additionally or alternatively used to any one of the other herein mentioned AI or ML pipelines. The first one of the AI processing components configured for at least one of entity detection, entity classification and optical character recognition for the image data may be similar or the same as the one of the second AI or ML pipeline. However, the second or the second and third AI processing components may be different in that it or they are configured for consequently, i.e., based on the detected entities, detected classes and/or recognized characters, classifying nodes and/or relationships in the IM data, in particular in the ontology thereof. For example, there may be a second AI processing component for classifying the nodes in the IM data or digital representation thereof. For example, the classification may be into certain nodes, which may be representative of standard types such as sensors and/or actuators. The second AI processing component may also have an OCR classifier for classifying unknown text in the image data. Further, for example, there may be a third AI processing component for establishing or classifying the relationships between the detected and/or classified entities and/or recognized text. In particular, the third AI processing component may follow the second AI processing component and establish or classify the relationships between the nodes classified by the second AI processing component.

In an example, the method may further comprise:
- evaluating a quality of the obtained IM data by comparing it to a threshold quality; and
- providing the MS data and the instruction data for processing by another one of two or more AI processing components if the quality does not correspond to the threshold quality; and
- obtaining the IM data by the other one of the two or more AI processing components.

The quality of the obtained IM data may be determined based on how accurate and/or how many errors in the IM data are contained. For evaluating a quality of the obtained IM data, a correctness of the IM data based on an ontology of the IM data requested according to the instruction data may be determined. That is, the instruction data or the one or more instructions thereof may indicate or comprise an ontology of the IM data that is to be generated by the one or more AI processing components. For example, the instruction data may include the instruction to provide the IM data in the form of a Brick schema or graph or any other ontology, e.g., Haystack. For this purpose, the instruction data may comprise an explanation, handbook, manual or similar of the Brick Ontology or a web reference or link to the Brick Ontology, for example. All of these are exemplary contextual information, which may be provided as part of the instruction data. The AI processing component may know or be trained with information about the Brick Ontology or any other standardized format or representation of IM data, such that a reference to the term of the standardized format, e.g., Brick Ontology, may suffice as part of the instruction data or contextual information. Accordingly, when the ontology is known or requested based on the instruction data, then it is known what the result is expected to look like, i.e., how the IM data is supposed to be structured. Thereby, a correctness of the IM data may be determined based on the expected ontology, e.g., by comparing the IM data to information, e.g., rules, indicative of the expected ontology or executing a software for checking the ontology, for example. IM data may be correct when it has no or no substantial errors, which are in conflict with its ontology, e.g., in conflict with rules of the ontology. The quality threshold may be set such that only a specific number and/or severity of errors or no errors are accepted. If the quality threshold is not met or is not corresponded to by the evaluated quality, then another AI processing component may be used, potentially giving a better quality. The IM data obtained by the other AI processing component may then be also evaluated in quality by comparing it to a threshold quality and, potentially providing the MS data and the instruction data for processing by another one of three or more AI processing components if the quality still does not correspond to the threshold quality. Hence, the steps of evaluating, providing and obtaining specified before may be repeated until a desired quality according to the threshold quality is reached with one of several AI processing components or not, for example. Specifically, the different AI processing components used for the step of providing of the MS data and the instruction data may be from the different AI or ML pipelines as specified herein. In particular the MS data and the instruction data may be provided to another one of two or three of the AI or ML pipelines specified herein after previously having been processed by one or two of the AI or ML pipelines.

In an example, the obtained IM data, in particular building information model data, may be indicative of a digital representation of the entities and of the therewith associated information. The digital representation may be visualized in a corresponding software executed by a data processing apparatus and one or more displays of the data processing apparatus. Hence, the IM data may be a comprehensive or holistic overview of all entities and the therewith associated information, e.g., their physical, virtual and/or logical characteristics. Hence, any application or system, such as but not limited to the MS, may make use of the IM data to control the technical systems of the one or more buildings, in particular for operation and/or maintenance of the one or more buildings.

In an example, the digital representation may be in the form of one or more ontologies. The ontology or ontologies may be in the form of any one of a graph, a tree representation or any other representation or information model description type, for example. A graph may be an abstract organizational data structure. It may represent a set of entities, such as the ones described herein, in particular but not only the physical entities, as nodes. It may represent relationships between the physical entities, e.g., the virtual entities and/or logical entities as edges or in other form. However, the nodes may also be representing the virtual entities and/or logical entities depending on the structure of the graph. Different kinds of graphs may be used, one example being the Brick Ontology. A Brick graph may be represented by a directed, labelled graph. Another example of a kind of ontology is Haystack.

In an example, the method may further comprise using the IM data in the building management system or another system of the one or more buildings. As described herein, for example, the IM data may be used to update the MS, e.g., in the course of physical updates, changes, modifications and similar of the one or more buildings. Additionally, or alternatively, the IM data may be used to update the MS entirely or partially in terms of one or more applications or capabilities or provide these one or more applications, systems or capabilities separately from the MS in another system, e.g., implemented in software, and execute them, for example, on the same or a different data processing system as used to operate the MS. For example, such applications or capabilities may be or relate to one or more of controlling occupant comfort inside the one or more buildings, efficient operation of the technical systems of the one or more buildings, reduction in energy consumption, reduced operating and maintaining costs, increased security, energy declaration of standard conformity and more. In case the MS already provides for any one of these applications or capabilities, the new application or capability may be enhanced and provided in addition or replace the previous one of the MS, e.g., to provide better energy optimization, provide better occupant comfort, and similar.

In an example, the instruction data may be configured for standardizing the MS data, in particular MS image data or, in other words image data, into a standardized format of IM data. In particular, the digital representation and in particular the one or more graphs may be standardized, thereby allowing to use existing systems or applications, such as an up to date MS or a system for energy optimization of buildings, with the IM data, in particular the digital representation, without requiring to transform the IM data in between or to adapt the existing systems or applications to the IM data. For example, the instruction data may include the instruction to provide the IM data in the form of a Brick schema or graph. For this purpose, the instruction data may comprise an explanation, handbook, manual or similar of the Brick Ontology or a web reference or link to the Brick Ontology, for example. All of these are exemplary contextual information, which may be provided as part of the instruction data.

In an example, at least part of the MS data may be in the form of text data and/or measurement data. For example, the MS data may comprise natural language data. For example, the text data may be in the form of natural languages. In particular, the entities may be described by the text data by natural language. The text data in different MS data from different buildings may use different natural language, e.g., terminology such as but not only names, codes, and similar, to describe the entities, e.g., the physical, virtual and/or logical entities of the MS data or the one or more buildings. Additionally, however, the MS data will at least partially be in the form of image data. Additionally, or alternatively, the MS data may comprise measurement data. The measurement data may be a time series of sensor readings or measurements, for example. Hence, the measurement data may comprise several readings or measurements of sensors in the one or more buildings at different times and with their time stamps, for example. At least all of the herein mentioned data types or forms may be extracted from the MS as MS data and used to obtain the IM data.

In an example, the one or more instructions may be in the form of prompts. Prompts are specific instructions for AI processing components on how to handle the data provided together with the instructions, i.e., the MS data. In particular, a prompt may define the expected result of the processing of the MS data by the AI processing component. For example, the prompt may define or request from the AI processing component that the expected result is a program code, e.g., of a certain program language, and configured to generate standardized IM data, such as Brick schema, based on the MS data, for example. Also, the prompt may comprise the MS data.

According to a second aspect of this disclosure, there are provided one or more computer program products comprising instructions which, when executed by one or more data processing apparatuses, cause the one or more data processing apparatuses to carry out the method of the first aspect of this disclosure.

The computer program product(s) may be a computer program or computer programs as such, meaning a computer program consisting of or comprising program code to be executed by the data processing apparatus, in particular computer.

Alternatively, the computer program product(s) may be a product or products such as a data storage(s), in particular computer-readable data storage medium(s), on which the computer program(s) may be temporarily or permanently stored.

According to a third aspect of this disclosure, there is provided a data processing system configured to carry out the method according to the first aspect of this disclosure.

It is noted that the above aspects, examples and features may be combined with each other irrespective of the aspect involved.

The above and other aspects of the present disclosure will become apparent from and elucidated with reference to the examples described hereinafter.

### BRIEF DESCRIPTION OF THE DRAWINGS

Exemplary embodiments will be further described with reference to Figures, wherein:
Figure 1 shows a building with a building management system;
Figure 2 shows a data processing system;
Figure 3 shows a computer program with its elements;
Figure 4 shows a method for obtaining information model data for the building of Fig. 1; and
Figure 5 shows a digital representation in the form of a graph of the IM data.

The Figures are schematic only and not true to scale. In principle, identical or like parts, elements and/or steps are provided with identical or like reference numerals in the Figures.

### DETAILED DESCRIPTION OF THE INVENTION

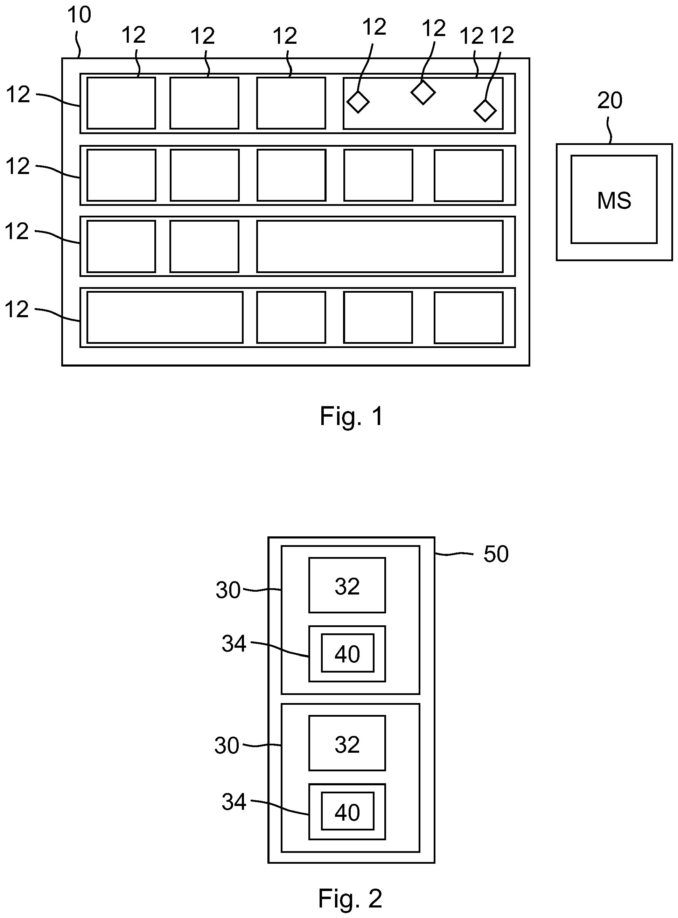

Figure 1 schematically shows an exemplary building 10, e.g., in the form of a residential or commercial building. The building 10 is shown with several entities 12, in particular physical entities 12, which may be in the form of spaces such as floors (see vertically stacked large rectangular structures) and rooms on the floors (see horizontally aligned rectangular structures inside the structures of the floors), and devices or components as herein described on the floors or inside the rooms (see diamond shaped entities 12 in the top right room of the building). The number, size, location, etc. of the entities 12 shown herein is merely exemplary to illustrate the general concept.

A building management system, BMS or MS, is shown exemplary to the right of the building 10 in Fig. 1. The MS may be implemented in hardware and/or software, meaning that the MS may be a data processing system 20, as shown in Fig. 1, executing a software, thereby providing the MS or, alternatively, the MS may be the software as such and as may be executed by the data processing system 20. In any case, the MS is configured to manage, in particular operate and/or control, the building 10 with its several entities 12. Besides the physical entities 12 shown in Fig. 1, the MS may comprise within its MS data other categories of entities, namely logical and/or virtual entities, as described herein.

The building 10 may be an existing or old building, where the MS may not be up to date in terms of its capabilities, functions, or applications. Or, another system or application may need to be provided, e.g., on top of the MS, for a more efficient control of the energy consumption by means of the physical entities 12 of the building 10, in particular from different technical systems requiring large amounts of energy, e.g., HVAC systems, lighting systems, and similar as described herein. Also, or alternatively, the building 10 may need to be modernized, e.g., brought to a new energetic standard, which may require removal, replacement and/or addition of entities 12, for example. In this case, also the MS may need to be updated.

However, the structure of the MS data of the MS may be not easily understandable by any new MS system, other system or application, in particular software thereof. That is because the MS data is typically not standardized and different buildings 10 have completely different MS data. This relates in particular but not only to natural language that may be describing the various types of entities 12 of the MS data. Specifically, the MS data may be at least partially in the form of image data, which may be captured as screenshots from a building management system, for example, and deriving an information model therefrom may be very difficult given that the information about the entities of the building 10 are typically not provided in any standardized form therein and distributed throughout the entire images, which may not be complete. Still, the MS data, even one which is at least partially in the form of image data, shall be used for transforming it into IM data, in particular a standardized format thereof, since only this MS data may be available or at least more information for the IM data may be derived therefrom, therefore making the IM data more accurate.

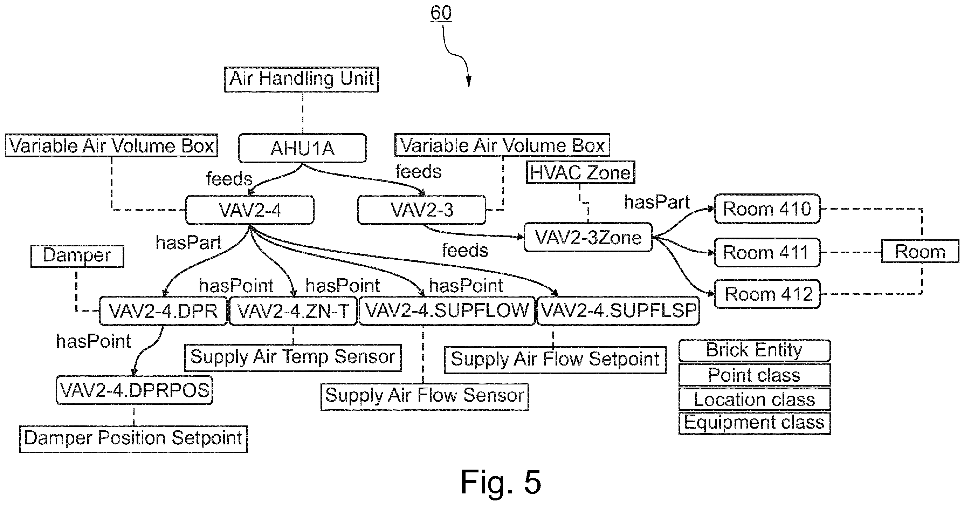

The IM data is indicative of or comprises a digital representation 60 of the entities 12 of or for the MS and/or the building 10 as exemplary shown partially in Figure 5. Specifically, Fig. 5 shows a Brick schema in the form of a graph for part of the building 10 and as may be used by a MS or any other system, e.g., implemented in software and/or hardware, or application of a system, in relation with the operation or control of the building 10, for example. A Brick schema is a standardized graph according to the Brick ontology.

In Figure 5, the Brick schema illustrates the technical information, e.g., physical, virtual and logical characteristics, of the different entities 12 also referred to as Brick entities in Fig. 5 and given natural language names. Different kinds of physical, virtual and logical entities are exemplary shown, e.g., for an HVAC system of the building 10, e.g., inside several rooms, exemplary named Room 410, 411, 412, as spatial entities of the building 10 and inside a Location class, and Sensor or Setpoint entities in a Point class are visualized. For example, the devices or equipment such as the Air Handling Unit, the Variable Air Volume Box, the Variable Volume Box within an Equipment class are shown. The Brick schema shows the relationships, e.g., in terms of location or operational, between the Brick Entities. For example, "feeds" as relationship with arrow from the Air Handling Unit AHU1A to the Variable Air Volume Box VAV2-4 means that AHU1A feeds VAV2-4. For example, "hasPart" as relationship with arrow from the HVAC zone VAV2-3Zone to the Rooms defines the location of VAV2-3Zone in the Rooms, and so on.

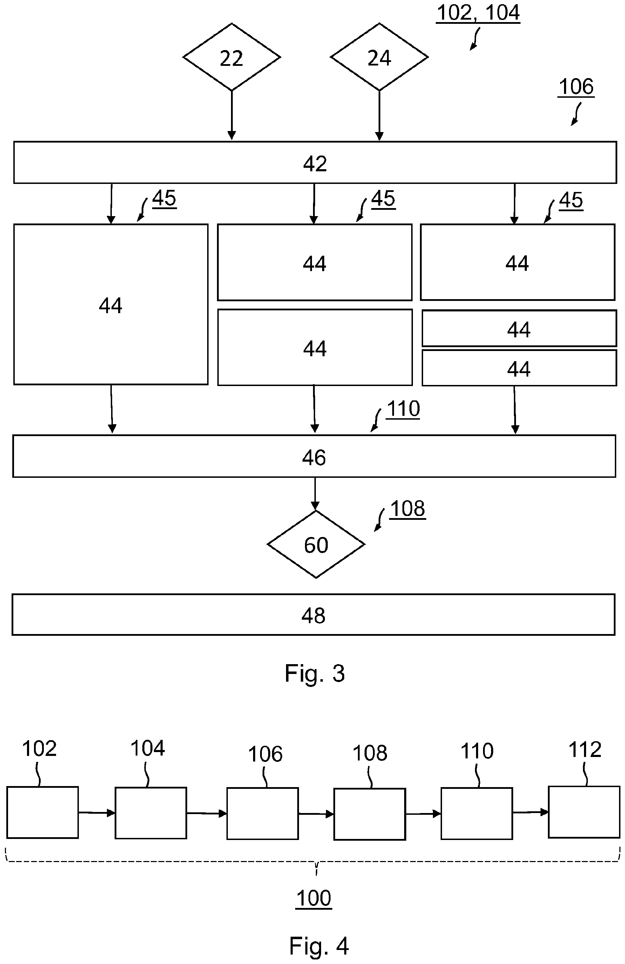

Figure 2 schematically shows another data processing system 50, which may comprise one or more data processing apparatuses 30, e.g., computers, two of which are shown for the purpose of example. The data processing system 50, in particular one or both of the data processing apparatuses 30, in particular their processors 32, may be used to carry out the method 100 for obtaining information model, IM, data for the building 10, in particular building information mode data, as schematically illustrated in Fig. 4. Each one of the exemplary two data processing apparatuses 30 comprises at least one processing unit or processor 32, e.g., a CPU, and at least one computer program product 34, e.g., in the form of a computer-readable storage medium. Computer programs 40 are stored on the computer program products 34.

Figure 3 schematically shows one or more computer elements 42, 44, 46, 48 of the computer programs 40 in the data processing system 50, which may form parts of the computer programs 40, e.g., different program code for different functions or steps of the method 100. Specifically, a computer program 40 of one of the data processing apparatuses 30 may be comprising the computer elements 42, 46, 48, which may be in the form of software codes or instructions for the processors 32. The other computer program 40 of the other data processing apparatus 30 in the data processing system 50 may comprise the computer element 44 or computer elements 44. The data processing system 50 may be a distributed computing environment, where, for example, the computer elements 42, 46, 48 or the computer elements 42, 48 are executed on a local user data processing apparatus 30, such as any stationary or mobile computer, and the computer elements 44 may be executed by a remote or server type of data processing apparatus 30, having increased processing capabilities for processing of the computer elements 44. Alternatively, the computer elements 42, 44, 46, 48 may be all provided as part of the same computer program 40 or executed by the same data processing apparatus 30.

For obtaining the IM data, the method 100 may comprise a step 102, in which the MS data 22 of or from the building management system is obtained, in particular by the data processing apparatus 30 executing the computer element(s) 42, 46 and/or 48. The MS data 22 may be directly transmitted by the MS or data processing system 20, for example, or via a storage medium, another data processing apparatus 30, based on user input, and similar, for example. At least part of the MS data 22 is in the form of image data. Parts of the MS data 22 may be in other form, e.g., text data and/or measurement data. The MS data 22 may be raw data, in particular raw building data. Step 102 may also comprise capturing the image data or one or more images, which may also be in the form of video. For example, one or more screenshots of the building management system or user interface thereof as seen in Fig. 1 may be taken in step 102. This may be in an automated manner such that, for example, all available user interfaces or graphical representations or images of the building management system, e.g., of the different rooms, floors, etc., are consecutively captured as screenshots. Alternatively, or additionally, the one or more images, in particular multiple images, may be in the form of technical drawings of the building 10, which may be scanned by a camera unit or received directly from the building management system, for example.

Further, in a step 104 of method 100, which may be after step 102 as shown or, alternatively, parallel or before, instruction data 24 comprising one or more instructions for processing the MS data 22 by the computer element(s) 44, which may be AI processing component(s) 44, for obtaining the IM data, may be obtained, in particular by the same data processing apparatus 30 as the one carrying out step 102.

Both, the MS data 22 and the instruction data 24, may then be provided to the computer element 42 (with only the MS data 22 being depicted exemplary in Fig. 3), which may be in the form of a router or routing element or software for providing or routing the MS data 22 and the instruction data 24 to any one of the AI processing components 44 in Fig. 3 for processing these, in a step 106 of method 100, after obtaining the MS data 22 and the instruction data 24.

In particular, the computer element 42 may be obtaining the MS data 22 and instruction data 24 as input data and assess it. The assessment may be done to determine which of the different AI processing components 44, in particular the exemplary three different AI or ML pipelines 45 formed thereby, the obtained MS data 22 and instruction data 24 should be provided or routed to. For example, the assessment can be done by checking a past or previous processing of the AI processing components 44 or Al or ML pipelines 45 or, in other words, prediction from a previous processing and potential feedback data, e.g., based on user input or from a user input, and check if there are processings or predictions and their requests which were similar. The similarity check can be done using embeddings or ML models such as Siamese networks etc. for images and text. If a similarity score is in general low, then a fallback may be to use analytical AI or ML models to get the output. There's a possibility that for getting sufficient data an ML model can be trained on the input images and optionally text to identify the AI or ML pipeline 45 to be chosen. Otherwise, weights can be assigned to each AI or ML pipeline 45 for certain accuracy. Other possibilities of assessment or routing, e.g., at random, are also possible.

The instruction data 24 may for example comprise one or more instructions in the form of a prompt or, in other words, query. The prompt may be configured such that it instructs the respective AI processing components 44 of the selected AI or ML pipeline 45 to generate the IM data when it is provided with the MS data 22 according to a standard such as the Brick schema or ontology.

In this example, three different AI or ML pipelines 45 are exemplary shown, to which the computer element 42 may route the MS data 22 and the instruction data 24 for processing thereof in a step 106 of method 100. Each one of the different AI or ML pipelines 45 may comprise different AI processing components 44. For example, the left AI or ML pipeline 45 in Fig. 3 comprises a generative AI processing component 44 based on at least one multimodal LLM. The generative AI processing component 44 based on the at least one multimodal LLM may advantageously process all content of the MS data 22, including the one being in the form of the image data, by interpreting the image data or converting it to the IM data despite being image data, in particular in the form of a knowledge graph and/or information of a specific ontology, such as Brick or Haystack, for example.

For example, the middle AI or ML pipeline 45 in Fig. 3 comprises two AI processing components 44. The first one, to which the MS data 22 and the instruction data 24 are initially provided by the computer element 42, may be configured for at least one of entity detection, entity classification and optical character recognition for the image data. The second one of the two AI processing components 44, to which the detected entities, classified entities and/or recognized characters in the image data are being provided by the first AI processing component 44 of that AI or ML pipeline 45, may be based on at least one LLM for processing the output from the first AI processing component 44 and thereby generating the IM data.

Further, for example, the right AI or ML pipeline 45 in Fig. 3 comprises three AI processing components 44, the first one of which may be the same or equal to the first one of the middle AI or ML pipeline 45. The second AI processing component 44 of that AI or ML pipeline 45 may be a node classifier and the third AI processing component 44 may be a relationship classifier. The second AI processing component 44 may accordingly classify the nodes in the IM data or digital representation 60 thereof. For example, the classification may be into certain nodes, which may be representative of standard types such as sensors and/or actuators. The second AI processing component 44 may also have an OCR classifier for classifying unknown text in the image data. The third AI processing component 44 may follow the second AI processing component 44 and establish or classify the relationships between the nodes classified by the second AI processing component 44.

Any or some of the AI processing components 44 may be generative AI processing components 44. Thereby, they may understand, e.g., based on neural network techniques, deep learning techniques, or similar, the content of the MS data, which may be in the form of at least image data, for example, and/or perform the entity classification, detection or node classification or relationship classification as explained. Specifically, the entity data or information associated with the entities 12 may be in the form of image data, e.g., artifacts or objects in the images of the image data and/or text data in the form of natural language shown in the images. However, since different MS data may give different names to different entities 12 and the image data of different MS data may be significantly different from one another, e.g., using different objects, artifacts, layouts, etc., it may not be possible to simply use a template to understand the MS data. Here, the AI processing components 44 may provide the capability of delivering results with high quality regarding the accuracy of the IM data according to a standardized schema, e.g., Brick.

Then, in step 108 of method 100, the IM data may be received, e.g., by the data processing apparatus 30 carrying out steps 102, 104 and 106, or any other data processing apparatus 30 of the data processing system 50. Optionally, the method 100 may also comprise the step of processing the MS data 22 and instruction data 24 by the one or more AI processing components 44 or AI or ML pipelines 45. As further below described herein, this process, e.g., with one or more of the steps 104, 106, 108 of method 100, may be a reiterative process.

Specifically, optionally, the method 100 may also comprise, in a step 110, evaluating a quality of the obtained IM data by comparing it to a threshold quality and providing the MS data 22 and the instruction data 24 for processing by another one of any one of the AI or ML pipelines 45 if the quality does not correspond to the threshold quality. Correspondingly, the IM data generated by the other AI or ML pipeline 45 to which the MS data 22 and instruction data 24 where initially routed by the computer element 22 may be obtained. Then, these steps may be repeated for all three of the AI or ML pipelines 45 if necessary, i.e., if the quality threshold is not met. The evaluation of the quality and comparison to a threshold quality may be executed by the computer element 46, which may be in the form of an output evaluator and which may be a software agent or program.

The IM data obtained with the required quality may then be used in step 112 of method 100. That is, in step 112 of method 100, a data processing apparatus 30, e.g., the same one as used for any one of the steps 102 to 112 of the method 100, or a different one, such as the data processing apparatus 20, may make use of the IM data. For example, the IM data may be used to update the MS executed by the data processing apparatus 20. In between, the IM data may be modified, e.g., based on any structural changes, e.g., removal, addition or replacement of entities 12, in particular from a technical system, of the building 10. Alternatively, or additionally, in step 112 of method 100, any other system or application, e.g., in the form of a software, may make use of the IM data, for example to optimize the energy consumption of the building 10.

However, optionally, the output in the form of the IM data, either meeting the quality threshold or not, may be provided for evaluation. For example, a user may evaluate the IM data. In particular a user may, based on user input, provide feedback for the IM data in the form of the digital representation 60. Further, for example, mapping of image parts to the nodes in the digital representation 60 may be used for re-training and/or finetuning the information model based on the feedback received from the user. The IM data or digital representation 60 may be correlated with the MS image data 22 used as input and fed back to any one of the AI or ML pipelines 45 for re-training and/or finetuning.

Further, a computer element 48 in the form of a combiner agent or software may be used in an additional step 114 of method 100, which may be executed before steps 110 and/or 112, for example. For example, for several MS data 22, in particular image data and/or metadata, the steps 102, 104, 106 and 108 may be iteratively executed and the IM data received after each iteration may be combined with each other to the final IM data, which may be used in step 112 of method 100. Alternatively, or additionally, this computer element 48 may combine the results from different AI or ML pipelines 45 with one another.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art and practicing the claimed invention, from a study of the drawings, the disclosure, and the claims.

As used herein, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Further, as used herein, the phrase "at least one" or similar, e.g., "one or more of", in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that such entities may optionally be present other than the entities specifically identified within the list of entities to which the phrase "at least one" or similar refers, whether related or unrelated to those entities specifically identified. Thus, as a non-limiting example, "at least one of A and B" (or, equivalently, "at least one of A or B" or, equivalently "at least one of A and/or B" or, equivalently "one or more of A and B", "one or more of A or B", or "one or more of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

As used herein, the phrase "being indicative of" may for example mean "reflecting" and/or "comprising". Accordingly, an entity, element and/or step referred to herein as "being indicative of [...]" can be synonymously or interchangeably used herein with one, two or all of said entity, element and/or step "comprising [...]" and said entity, element and/or step "reflecting [...]". Further, as used herein, phrases such as "based on", "related" or "relating", "associated" and similar are not to be seen exclusively in terms of the entities, elements and/or steps to which they are referring, unless otherwise stated. Instead, these phrases are to be understood inclusively, unless otherwise stated, in that, for example, an entity, element or step referring by any of these phrases or similar, e.g., being "based on", an or another entity, element or step, does not exclude that the respective entity, element or step may be further or also "based on" any other entity, element or step than the one to which it refers.

The designation of methods and steps as first, second, etc. as provided herein is merely intended to make the methods and their steps referenceable and distinguishable from one another. By no means does the designation of methods and steps constitute a limitation of the scope of this disclosure. For example, when this disclosure describes a third step of a method, a first or second step of the method do not need to be present yet alone be performed before the third step unless they are explicitly referred to as being required per se or before the third step. Moreover, the presentation of methods or steps in a certain order is merely intended to facilitate one example of this disclosure and by no means constitutes a limitation of the scope of this disclosure. Generally, unless no explicitly required order is being mentioned, the methods and steps may be carried out in any feasible order. Specifically, the terms first, second, third or (a), (b), (c) and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In the context of the present invention any numerical value indicated is typically associated with an interval of accuracy that the person skilled in the art will understand to still ensure the technical effect of the feature in question. As used herein, the deviation from the indicated numerical value is in the range of ± 10%, and preferably of ± 5%. The aforementioned deviation from the indicated numerical interval of ± 10%, and preferably of ± 5% is also indicated by the terms "about" and "approximately" used herein with respect to a numerical value.

Any reference signs in the claims should not be construed as limiting the scope.

## Claims

1. A method (100) for obtaining information model, IM, data for one or more buildings (10), the method (100) comprising:
- obtaining building management system, MS, data (22) of a building management system of the one or more buildings (10), the MS data (22) being at least in the form of image data;
- obtaining instruction data (24) comprising one or more instructions for processing the MS data (22) by one or more Artificial Intelligence, Al, processing components (44) for generating the IM data;
- providing the MS data (22) and the instruction data (24) for processing by the one or more AI processing components (44); and
- obtaining the IM data by the AI processing component (44).

2. The method (100) of claim 1, wherein the MS data (22) and/or the IM data is indicative of information associated with entities (12) of the one or more buildings (10), wherein the entities (12) are at least one or more of: Heating, Ventilation and/or Air Conditioning, HVAC, entities, lighting entities, electrical entities, spatial entities, sensor entities, or control entities.

3. The method (100) of claim 2, wherein the information associated with the entities (12) relates at least to one or more of: a location of the entities, a type of the entities, a status of the entities, a usage of the entities, a function of the entities, a size of the entities, or a relationship between the entities.

4. The method (100) of any one of the previous claims, wherein the image data at least relates to one or more screenshots of the building management system of the one or more buildings (10) and/or one or more technical drawings of the one or more buildings (10).

5. The method (100) of any one of the previous claims, wherein at least one of the one or more AI processing components (44) is a generative AI processing component based on at least one Large Language Model, LLM.

6. The method (100) of any one of the previous claims, wherein at least one of the one or more AI processing components (44) is based on at least one multimodal LLM.

7. The method (100) of claim 5 or 6, wherein another one of two or more AI processing components (44) is configured for at least one of entity detection, entity classification and optical character recognition for the image data prior to the thereby detected entities, classified entities and/or recognized optical characters being processed by the AI processing component (44) being based on the at least one LLM.

8. The method (100) of any one of the previous claims, wherein one of two or more AI processing components (44) is configured for at least one of entity detection, entity classification and optical character recognition for the image data, and another one of the two or more AI processing components (44) is configured for consequently classifying nodes and/or relationships of the detected entities, detected classes and/or recognized characters in the IM data.

9. The method (100) of any one of the previous claims, wherein the method (100) further comprises:
- evaluating a quality of the obtained IM data by comparing it to a threshold quality; and
- providing the MS data (22) and the instruction data (24) for processing by another one of two or more AI processing components (44) if the quality does not correspond to the threshold quality; and
- obtaining the IM data by the other one of the two or more AI processing components (44).

10. The method (100) of any one of the previous claims, wherein the IM data is indicative of a digital representation (60) of the entities (12) and of the therewith associated information, wherein the digital representation (60) is in the form of one or more ontologies.

11. The method (100) of any one of the previous claims, wherein the method (100) further comprises using the IM data in the building management system or another system of the one or more buildings (10).

12. The method (100) of any one of the previous claims, wherein the instruction data (24) is configured for standardizing the MS data (22) into a standardized format of IM data.

13. The method (100) of any one of the previous claims, wherein at least part of the MS data (22) is further in the form of text data and/or measurement data.

14. One or more computer program products (34, 40) comprising instructions which, when executed by one or more data processing apparatuses (30), cause the one or more data processing apparatuses (30) to carry out the method (100) of any one of the previous claims.

15. A data processing system (50) configured to carry out the method (100) of any one of claims 1 to 13.
